# EUROPEAN PATENT SPECIFICATION

(11) **EP 1 681 522 B1**
(45) Date of publication and mention of the grant of the patent: **17.09.2008**
(21) Application number: 06008852.3
(22) Date of filing: 03.12.2004
(51) Int. Cl.: F25B 43/00

(54) **Gas liquid separator**
Gasflüssigkeitsabscheider
Séparateur gaz-liquide

(30) Priority: 09.12.2003 JP 2003409863
(43) Date of publication of application: 19.07.2006
(62) Divisional of application: 04028755.9
(73) Proprietor: Fujikoki Corporation, Tokyo (JP)
(72) Inventor: Watanabe, Ryouji, Setagaya-ku Tokyo (JP); Furuta, Takuji, Setagaya-ku Tokyo (JP)
(74) Representative: Steinmeister, Helmut

(56) References cited:
- GB-A- 176 956
- GB-A- 300 841
- US-A- 1 523 916
- US-A- 2 214 658
- US-A- 3 881 900
- US-A- 4 194 371
- PATENT ABSTRACTS OF JAPAN vol. 2002, no. 02, 2 April 2002 (2002-04-02) & JP 2001 289539 A (DENSO CORP), 19 October 2001 (2001-10-19)

## Description

### BACKGROUND OF THE INVENTION

### Field of the invention

The present invention relates to a gas liquid separator equipped in a refrigeration cycle.

### Description of the related art

Document GB-176,156 A discloses a steam dryer having a water separating chamber in which the steam is given high velocity rotary flow in order to separate out the contained water by centriugal force, wherein the steam inlet and steam outlet are divided from one another by a partition obstructing direct flow of steam therebetween and having guide deflecting passages therein through which the whole of the inflowing steam passes and by which high velocity rotary flow is inparted thereto and that the water discharge outlet is on the side of the partition remote from the steam inlet.

Regarding gas liquid separators equipped in a refrigeration cycle, a type of gas liquid separator capable of being attached directly to the side wall of a condenser for the refrigerant is proposed.

In the field of air conditioners equipped in a vehicle, the space that the air conditioner occupies in an engine room is required to be as small as possible, and for this purpose, there is a demand to reduce the size of the condenser and also reduce the diameter of the gas liquid separator.

Japanese Patent Application Laid-Open Publication No. 2003-202168 (Patent document 1) discloses a gas liquid separator that provides rotational flow to a gas-liquid mixed refrigerant flowing into the gas liquid separator, and to facilitate separation of the refrigerant into a gas phase refrigerant and a liquid phase refrigerant using centrifugal force.

When a small-diameter cylindrical gas liquid separator is attached vertically on the side wall of a condenser and a mixed refrigerant of gas and liquid is led into the gas liquid separator from the upper portion of the body which is flown in the body in spiral motion, since the body is of small diameter, the spiral flow speed increases, and the rotational flow of fluid collides against the liquid refrigerant accumulated on the bottom of the gas liquid separator, disturbing the accumulated liquid.

This disturbance of the liquid refrigerant is one of the causes that deteriorate the gas-liquid separation performance of the separator.

### SUMMARY OF THE INVENTION

Therefore, the present invention aims at providing a gas liquid separator capable of solving the prior art problems mentioned above.

The gas liquid separator according to the present invention has, as basic means, a cylindrical body, an outlet pipe for the gas phase refrigerant inserted to a center portion of the body, an inlet port for the two-phase refrigerant attached to an upper portion of the body in a direction tangential to the body, an outlet port for the liquid phase refrigerant attached to a lower portion of the body, and a rectifying member for the refrigerant attached between the inlet port for the two-phase refrigerant and the outlet port for the liquid phase refrigerant. Further, the rectifying member is equipped with a function to rectify the refrigerant having been subjected to centrifugal separation and to send the same to a reservoir for the liquid phase refrigerant.

According to the above arrangement, the gas liquid separator of the present invention can improve the gas-liquid separation performance while preventing the separated gaseous refrigerant from disturbing the liquid in the reservoir.

### BRIEF DESCRIPTION OF THE DRAWINGS

FIG. 1 is an explanatory view of a gas liquid separator;
FIG. 2 is an explanatory view of embodiment 1 of a rectifying ;
FIG. 3 is an explanatory view of embodiment 2 of the rectifying;
FIG. 4 is an explanatory view of embodiment 3 of the rectifying ;
FIG. 5 is an explanatory view of embodiment 4 of the rectifying ;
FIG. 6 is an explanatoryview of embodiment 5 of the rectifying ;
FIG. 7 is an explanatory view of embodiment 6 of the rectifying;
FIG. 8 is an explanatory view illustrating an embodiment of the gas liquid separator according to the present invention;
FIG. 9 is an explanatory view illustrating yet another embodiment of the gas liquid separator according to the present invention; and
FIG. 10 is an explanatory view of the gas liquid separating member of the gas liquid separator shown in FIG. 9.

### DETAILED DESCRIPTION OF THE PREFERRED EMBODIMENTS

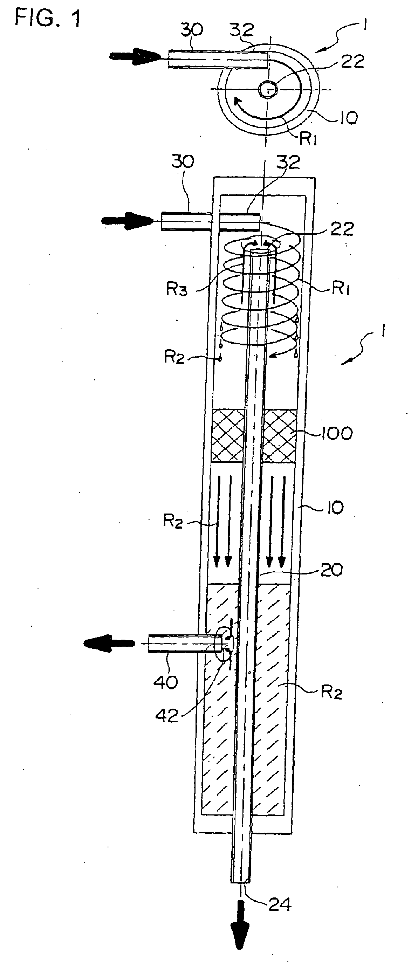

FIG. 1 is an explanatory view showing the structure of a gas liquid separator.

A gas liquid separator, the whole of which being denoted by reference number 1, comprises a small diameter cylindrical body 10, and inside the body 10 at the center area thereof is disposed an outlet pipe 20 for the gas phase refrigerant. The outlet pipe 20 of the gas phase refrigerant has an inlet port 22 for the gas phase refrigerant opening at the upper area of the body 10, and an outlet port 24 protruded from the bottom portion of the body 10.

At the upper area of the body 10 is attached an inlet pipe 30 for a two-phase refrigerant in which gas and liquid are mixed. An exit portion 32 of the inlet pipe 30 of the two-phase refrigerant is disposed so as to open in the direction tangential to the cylindrical body 10.

A two-phase refrigerant R₁ flowing in through the exit portion 32 of the inlet pipe 30 toward the direction tangential to the body 10 forms a rotational flow, and by the centrifugal force of the flow, the flow of refrigerant is separated into a liquid phase refrigerant R₂ having a larger specific gravity and a gas phase refrigerant R₃ having a smaller specific gravity.

The separated gas phase refrigerant R₃ flows into the inlet port 22 of the gas phase refrigerant outlet pipe 20, and is sent toward a compressor.

The separated liquid phase refrigerant R₂ passes through a rectifying member 100described later. The liquid phase refrigerant R₂ being rectified through the rectifying member 100 is accumulated at the lower portion of the body 10.

The accumulated liquid phase refrigerant R₂ flows out through an entrance portion 42 of a liquid phase refrigerant outlet pipe 40, and is sent toward an expansion valve.

Now, we will describe various preferred embodiments of the rectifying member.

### [Embodiment 1]

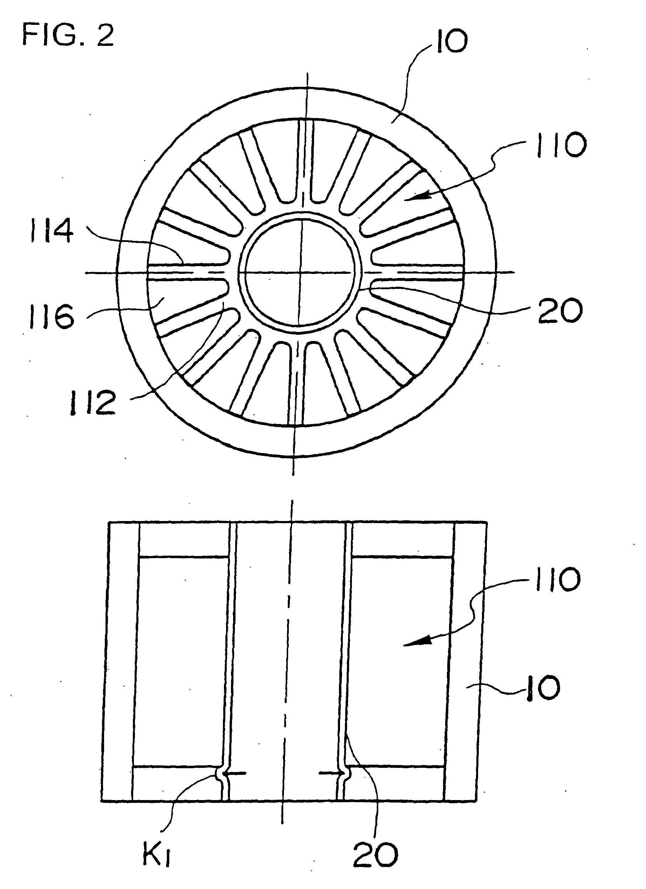

FIG. 2 illustrates a first embodiment of the rectifying member.

A rectifying member 110 is inserted between the gas phase refrigerant outlet pipe 20 and the body 10, and comprises a cylinder portion 112 that fits to the outer circumference portion of the pipe 20 and a plurality of blade portions 114 that extend radially from the cylinder portion 112.

The rectifying member 110 is formed for example of plastic material. An annular protruded portion K₁ is formed to the pipe 20 for example via a burring process, for supporting the rectifying member 110.

The liquid phase refrigerant is rectified when passing through a flow path 116 defined by the blade portion 114. The length of the rectifying member 110 in the axial direction can be determined appropriately according to the specifications of the gas liquid separator.

### [Embodiment 2]

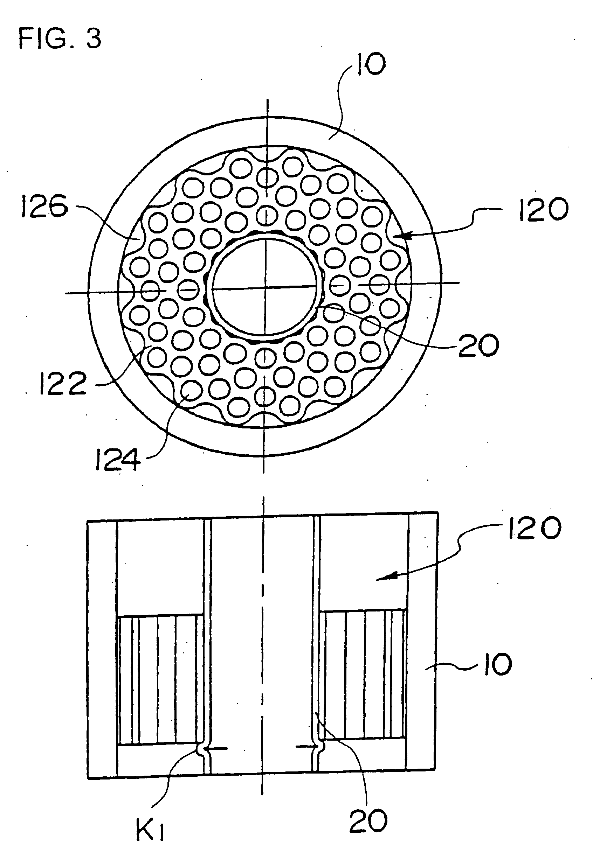

FIG. 3 shows a second embodiment of a rectifying member

A rectifying member 120 is inserted between the gas phase refrigerant outlet pipe 20 and the body 10.

The rectifying member 120 is formed for example of plastic material, and a body portion 122 thereof has a number of cylindrical bores 124 formed thereto. Wavy opening portions 126 are provided to the outer circumference portion of the rectifying member 120.

An annular protruded portion K₁ is formed to the pipe 20 for example via a burring process, for supporting the rectifying member 120.

The liquid phase refrigerant is rectified when passing through the cylindrical bores 124 and the wavy opening portions 126 of the rectifying member 120.

The length of the rectifying member 120 in the axial direction can be determined appropriately according to the specifications of the gas liquid separator.

### [Embodiment 3]

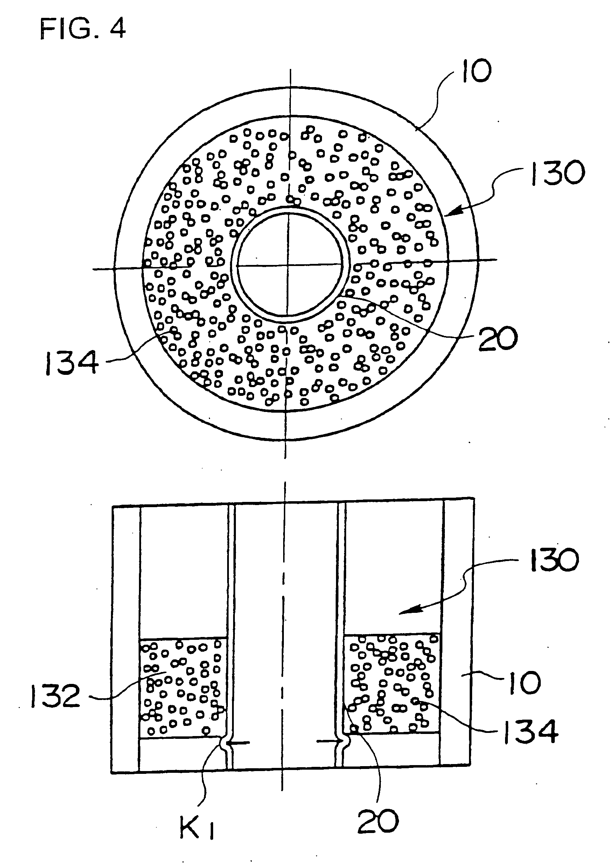

FIG. 4 shows a third embodiment of a rectifying member .

A rectifying member 130 is inserted between the gas phase refrigerant outlet pipe 20 and the body 10.

The rectifying member 130 is formed for example of porous foamed plastic material, and has a number of opening portions 134 formed within a body portion 132.

An annular protruded portion K₁ is formed to the pipe 20 for example via a burring process, for supporting the rectifying member 130.

The liquid phase refrigerant is rectified when passing through the opening portions 134 of the rectifying member 130.

The length of the rectifying member 130 in the axial direction can be determined appropriately according to the specifications of the gas liquid separator.

### [Embodiment 4]

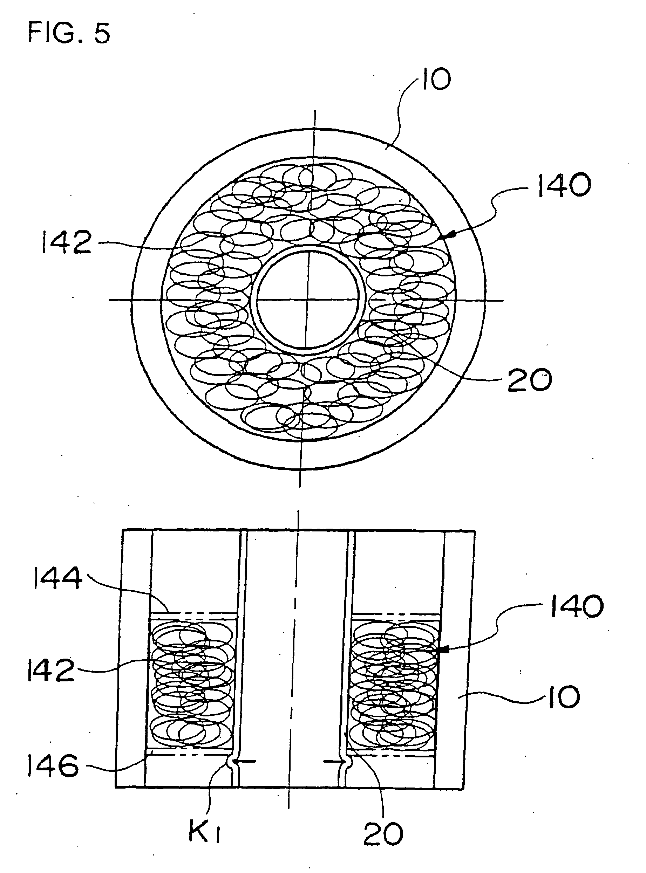

FIG. 5 shows a fourth embodiment of a rectifying member.

A rectifying member 140 is inserted between the gas phase refrigerant outlet pipe 20 and the body 10.

The rectifying member 140 is a sort of a filter formed by winding fine-gage wire 142, and is formed of metal or resin wire.

It is possible to dispose porous plates 144 and 146 above and below the wire 142 for retention.

An annular protruded portion K₁ is formed to the pipe 20 for example via a burring process, for supporting the rectifying member 140.

The liquid phase refrigerant is rectified when passing through the rectifying member 140.

The length of the rectifying member 140 in the axial direction can be determined appropriately according to the specifications of the gas liquid separator.

### [Embodiment 5]

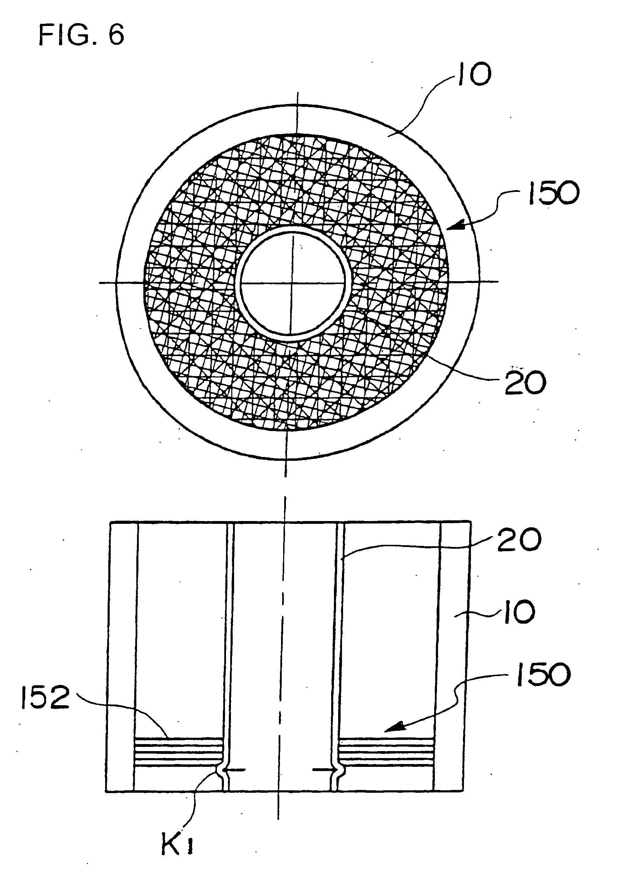

FIG. 6 shows a fifth embodiment of a rectifying member.

A rectifying member 150 is inserted between the gas phase refrigerant outlet pipe 20 and the body 10.

The rectifying member 150 is formed for example by layering a plurality of meshed members 152 formed of metal or plastic.

An annular protruded portion K₁ is formed to the pipe 20 for example via a burring process, for supporting the rectifying member 150.

The liquid phase refrigerant is rectified when passing through the rectifying member 150.

The length of the rectifying member 150 in the axial direction can be determined appropriately according to the specifications of the gas liquid separator.

### [Embodiment 6]

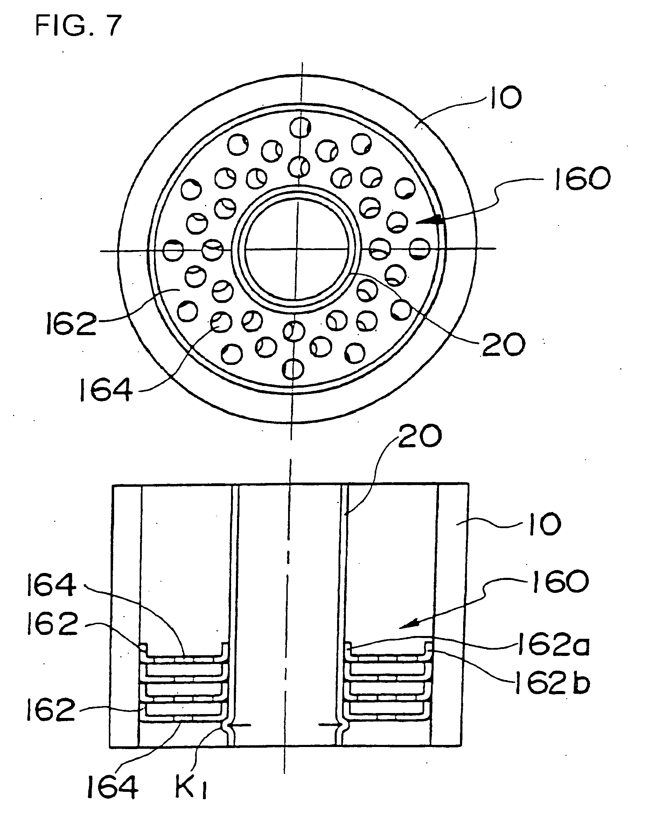

FIG. 7 shows a sixth embodiment of a rectifying member.

A rectifying member 160 is inserted between the gas phase refrigerant outlet pipe 20 and the body 10.

The rectifying member 160 is formed for example by layering a plurality of porous plates 162 formed of metal or plastic.

It is possible to form flanges 162a and 162b on the inner and outer circumferences of the porous plates 162 to regulate the interval between the plates.

An annular protruded portion K₁ is formed to the pipe 20 for example via a burring process, for supporting the rectifying member 160.

The liquid phase refrigerant is rectified when passing through the pores 164 of the rectifying member 160.

The length of the rectifying member 160 in the axial direction can be determined appropriately according to the specifications of the gas liquid separator.

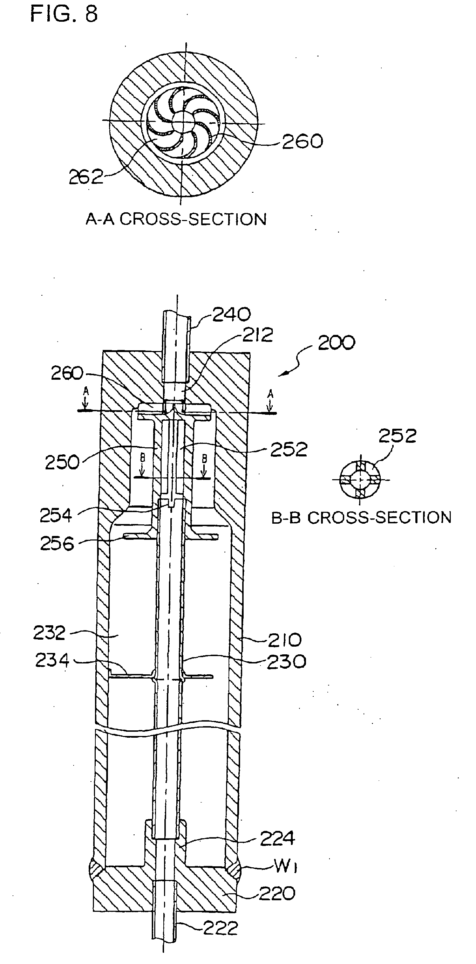

FIG. 8 is an explanatory view showing an embodiment of the gas liquid separator according to the present invention.

A gas liquid separator denoted as a whole by reference number 200 comprises a cylindrical body 210, and to an opening portion at the lower part of the body 210 is attached a header 220 via a weld portion W₁.

An outlet pipe 222 for gas phase refrigerant is attached to the header 220. A boss portion 224 is formed to the inner center portion of the header 220, and a hole formed to the center of the boss portion 224 receives an inserted lower end of a pipe member 230 and thus supports the pipe member 230.

A through hole 212 is formed to the upper center area of the body 210, to which is connected an inlet pipe 240 for a two-phase refrigerant. Directly under the inlet pipe 240 is disposed a gas liquid separating member 250.

The gas liquid separating member 250 can be, for example, a member formed by integrally molding a plastic material, which is fit to an upper end of the pipe member 250 using a projection 254.

A rotary blade portion 260 is provided to the upper area of the gas liquid separating member 250. The two-phase refrigerant flowing into the body 210 of the gas liquid separator from the inlet pipe 240 via the through hole 212 passes through the rotary blade portion 260.

The refrigerant constitutes a rotational flowwhen it passes through this rotary passage 262, and is sprayed into the interior of the body 210. By the centrifugal force created by the rotational flow, the refrigerant is separated into a liquid phase refrigerant having larger weight and a gas phase refrigerant having smaller weight.

Slits 252 are formed to the gas liquid separating member 250, and through these slits, the gas phase refrigerant enters the pipe member 230 and is sent out through the outlet pipe 222.

The liquid phase refrigerant is accumulated in a reservoir 232, which can be equipped with the above-mentioned rectifying member or the like. In order to do so, it is possible to provide a support plate 234 to the pipe member 230.

Similar to the aforementioned embodiments, the present gas liquid separator is provided with an outlet port for the liquid phase refrigerant.

A flange 256 formed to the gas liquid separating member 250 prevents the liquid phase refrigerant from returning toward the slits 252.

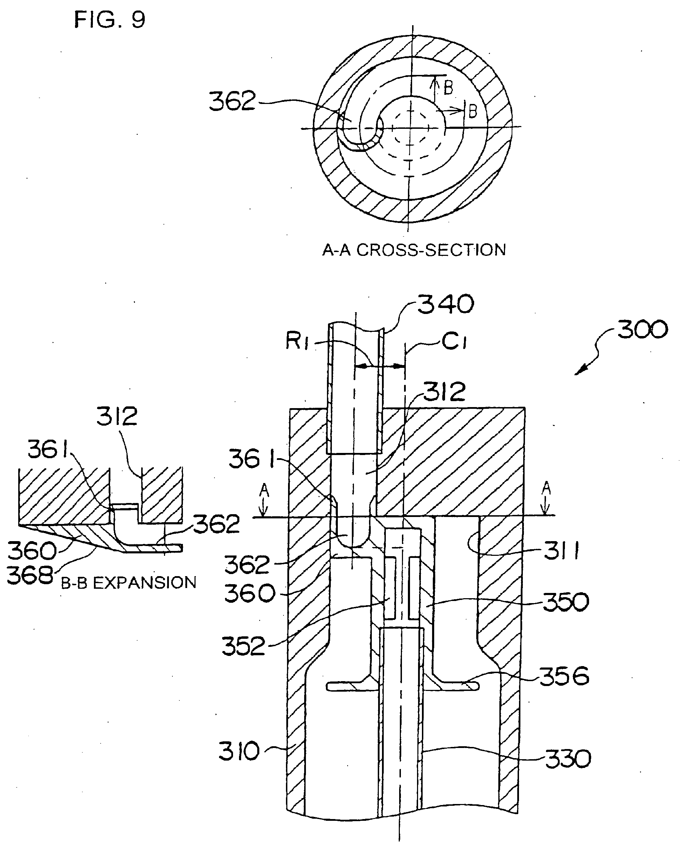

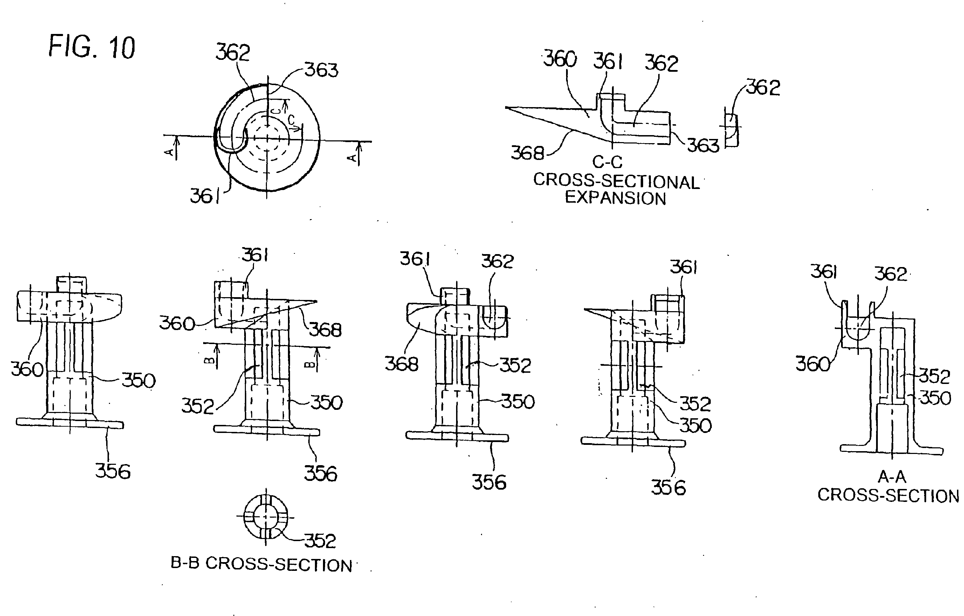

FIGS. 9 and 10 are explanatory views showing another embodiment of the gas liquid separator according to the present invention.

A gas liquid separator denoted as a whole by reference number 300 has a cylindrical body 310.

FIG. 9 illustrates the structure of only the upper area of the body 310, but the arrangements of other areas of the cylindrical body are the same as those explained with reference to FIG. 8, so they are omitted from the drawing.

A through hole 312 is provided to the upper portion of the body 310, which is displaced from an axis C₁ of the body 310 in the radial direction by distance R₁. An inlet pipe 340 of a two-phase refrigerant is connected to this through hole 312.

A gas liquid separating member 350 is attached to the upper end of a pipe member 330 disposed along the axis C₁ of the body 310.

The gas liquid separating member 350 has a refrigerant inlet portion 361 inserted to the through hole 312 of the body 310, and a rotary passage 362 disposed so as to guide the refrigerant along the inner circumference wall of the body 310.

As shown in FIG. 10, the rotary passage 362 is disposed only within a 90-degree area from the axial center of the refrigerant inlet portion, and terminates at an outlet end 363.

The two-phase refrigerant entering through an inlet pipe 340 and a through hole 312 into the body 310 in parallel with the axis of the body 310 is converted into a rotational flow when passing through the rotary passage 362, and flows along the inner circumference wall 311 of the body 310.

Opposite to the rotary passage 362 with respect to the axial center of the refrigerant inlet portion 361 of the gas liquid separating member 350 is formed a slanted lower surface 368 that extends for 180 degrees.

The rotational flow of refrigerant contacts this slanted lower surface and is biased downward, and thus converted into a swirling flow. In this downward swirling flow, the two-phase refrigerant is separated into a liquid phase refrigerant and a gas phase refrigerant by their differences in specific gravity.

The separated gas phase refrigerant is sent out to the exterior through slits 352 formed to the gas liquid separating member 350 and via the pipe member 330.

A flange 356 of the gas liquid separating member 350 prevents the liquid phase refrigerant from flowing toward the slits.

The separated liquid phase refrigerant is accumulated at the bottom portion of the body 310 and sent out to the exterior as needed.

### [Industrial Applicability]

As described, the present invention is capable of improving the performance of a gas liquid separator equipped in an air conditioner of a vehicle or the like.

## Claims

1. A gas liquid separator (200,300) for separating a two-phase refrigerant of gas and liquid in a refrigeration cycle to a liquid phase refrigerant and a gas phase refrigerant, the gas liquid separator (200,300) comprising:
a cylindrical body (210,310);
an outlet pipe (222) for the gas phase refrigerant inserted along a center axis at a lower portion of the body (210,310);
a pipe member (230,330) having a lower end supported by the lower portion of the body (210,310) and communicating with the outlet pipe (222) for the gas phase refrigerant;
an inlet port (240,340) for the two-phase refrigerant disposed at an upper portion of the body (210,310); and
a gas liquid separating member (250,350) supported at an upper end portion of the pipe member (230,330),
wherein the gas liquid separating member (250,350) is equipped with a rotary passage (262,362) for providing a rotational flow to the refrigerant entering the gas liquid separating member (250,350),
**characterized in that** said gas liquid separator (200,300) is provided with a reservoir (232) below the gas liquid separating member (250,350) for accumulating the liquid phase refrigerant,
and said gas liquid separating member (250,350) comprising slits (252,352) and being equipped with a flange (256,356) at its lower portion to prevent the liquid phase refrigerant from returning toward the slits (252,352).

2. A gas liquid separator according to claim 1, wherein said inlet port (240) for the two-phase refrigerant is disposed along the center axis at an upper portion of the body (210), and the gas liquid separating member (250,350) is equipped with a rotary blade portion (260) having its center facing the inlet port (240) for the two-face refrigerant.

3. The gas liquid separator according to claim 1, wherein the inlet port (340) for the two-phase refrigerant is disposed at an upper portion of the body (310) at a position parallel to and spaced from the center axis.

4. The gas liquid separator according to claim 3, wherein the rotary passage (362) is disposed to extend substantially 90 degrees around the axis of the body (310).

5. The gas liquid separator according to claim 3 or claim 4, further comprising a slanted surface (368) for biasing the flow of refrigerant exiting the rotary passage to the downward direction of the body (310).

## Patentansprüche

1. Gasflüssigkeitsabscheider (200,300) zum Abscheiden eines zweiphasigen Kältemittels aus Gas und Flüssigkeit in einem Kältemittelkreislauf in ein Kältemittel in einer flüssigen Phase und ein Kältemittel in einer Gasphase, welcher Gasflüssigkeitsabscheider (200,300) umfaßt:
einen zylindrischen Körper (210,320); ein Auslaßrohr (222) für das Kältemittel in der Gasphase, das entlang einer Mittelachse in einen unteren Bereich des Körpers (210,310) eingesetzt ist;
ein Rohrelement (230,330), dessen unteres Ende durch den unteren Bereich des Körpers (210,310) gestützt wird und welches mit dem Auslaßrohr (222) für das Kältemittel in der Gasphase in Verbindung steht;
eine Einlaßöffnung (240,340) für das zweiphasige Kältemittel, die an einem oberen Bereich des Körpers (210,310) angeordnet ist; und
ein Gas-Flüssigkeits-Abscheideorgan (250,350), das an einem oberen Endbereich des Rohrelements (230,330) gelagert ist,
wobei das Gas-Flüssigkeits-Abscheideorgan (250,350) mit einem Rotationskanal (262,362) zur Schaffung einer Rotationsströmung in dem Kältemittel versehen ist, das in das Gas-Flüssigkeits-Abscheideorgan (250,350) eindringt,
**dadurch gekennzeichnet, daß** der Gasflüssigkeitsabscheider (200,300) mit einem Sammelraum (232) unterhalb des Gas-Flüssigkeits-Abscheideorgans (250,350) zum Sammeln des Kältemittels in der flüssigen Phase versehen ist,
und daß das Gas-Flüssigkeits-Abscheideorgan (250,350) Schlitze (252,352) aufweist und an seinem unteren Bereich mit einem Flansch (256,356) ausgestattet ist, der das Kältemittel in der flüssigen Phase von der Rückkehr zu den Schlitzen (252,352) abhält.

2. Gasflüssigkeitsabscheider gemäß Anspruch 1, bei welchem die Einlaßöfnung (240) des zweiphasigen Kältemittels entlang der Mittelachse an einem oberen Bereich des Körpers (210) angeordnet ist und das Gas-Flüssigkeits-Abscheideorgan (250,350) mit einem Rotationsflügelbereich (260) ausgestattet ist, dessen Mitte der Einlaßöffnung (240) für das zweiphasige Kältemittel zugewandt ist.

3. Gasflüssigkeitsabscheider gemäß Anspruch 1, bei welchem die Einlaßöffnung (340) für das zweiphasige Kältemittel an einem oberen Bereich des Körpers (310) in einer Position parallel zur Mittelachse und von dieser beabstandet angeordnet ist.

4. Gas-Flüssigkeitsabscheider gemäß Anspruch 3, bei welchem der Rotationskanal (362) derart angeordnet ist, daß er sich im wesentlichen 90° um die Achse des Körpers (310) herum erstreckt.

5. Gas-Flüssigkeitsabscheider gemäß Anspruch 3 oder Anspruch 4, ferner umfassend eine geneigte Oberfläche (368) zur Verstärkung des Kältemittel-Stroms, der den Rotationskanal in der Abwärtsrichtung des Körpers (310) verläßt.

## Revendications

1. Séparateur gaz liquide (200, 300) destiné à séparer un réfrigérant diphasique de gaz et liquide au cours d'un cycle de réfrigération en un réfrigérant en phase liquide et un réfrigérant en phase gazeuse, le séparateur gaz liquide (200, 300) comprenant :
un corps cylindrique (210, 310) ;
un tuyau de sortie (222) pour le réfrigérant en phase gazeuse inséré le long d'un axe central dans une partie inférieure du corps (210, 310) ;
un élément de tuyau (230, 330) présentant une extrémité inférieure supportée par la partie inférieure du corps (210, 310) et communiquant avec le tuyau de sortie (222) pour le réfrigérant en phase gazeuse ;
un orifice d'entrée (240, 340) pour le réfrigérant diphasique disposé dans une partie supérieure du corps (210, 310) ; et
un élément de séparation gaz liquide (250, 350) supporté dans une partie d'extrémité supérieure de l'élément de tuyau (230, 330),
dans lequel l'élément de séparation gaz liquide (250, 350) comporte un passage rotatif (262, 362) destiné à fournir un écoulement rotationnel au réfrigérant pénétrant dans l'élément de séparation gaz liquide (250, 350),
**caractérisé en ce que** ledit séparateur gaz liquide (200, 300) est pourvu d'un réservoir (232) au-dessous de l'élément de séparation gaz liquide (250, 350) destiné à accumuler le réfrigérant en phase liquide,
et ledit élément de séparation gaz liquide (250, 350) comprend des fentes (252, 352) et est équipé d'un rebord (256, 356) dans sa partie inférieure pour empêcher le réfrigérant en phase liquide de revenir vers les fentes (252, 352).

2. Séparateur gaz liquide selon la revendication 1, dans lequel ledit orifice d'entrée (240) pour le réfrigérant diphasique est disposé le long de l'axe central dans une partie supérieure du corps (210), et l'élément de séparation gaz liquide (250, 350) comporte une partie de lame rotative (260) ayant son centre tourné vers l'orifice d'entrée (240) pour le réfrigérant diphasique.

3. Séparateur gaz liquide selon la revendication 1, dans lequel l'orifice d'entrée (340) pour le réfrigérant diphasique est disposé dans une partie supérieure du corps (310) dans une position parallèle à l'axe central et espacée de celui-ci.

4. Séparateur gaz liquide selon la revendication 3, dans lequel le passage rotatif (362) est disposé pour s'étendre sensiblement sur 90 degrés autour de l'axe du corps (310).

5. Séparateur gaz liquide selon la revendication 3 ou la revendication 4, comprenant en outre une surface inclinée (368) destinée à solliciter l'écoulement de réfrigérant quittant le passage rotatif vers la direction orientée vers le bas du corps (310).
